# EUROPEAN PATENT SPECIFICATION

(11) **EP 4 228 438 B1**
(45) Date of publication and mention of the grant of the patent: **19.03.2025**
(21) Application number: 21807246.0
(22) Date of filing: 15.10.2021
(51) Int. Cl.: A23N 1/02

(54) **PLANT AND PROCESS FOR PRODUCING PUREE AND/OR JUICE WITH A HIGH VISCOSITY FROM A FOOD PRODUCT OF VEGETABLE ORIGIN**
VORRICHTUNG UND VERFAHREN ZUR HERSTELLUNG VON PÜREE UND/ODER SAFT MIT HOHER VISKOSITÄT AUS LEBENSMITTELN PFLANZLICHER HERKUNFT
DISPOSITIF ET PROCEDE POUR LA PRODUCTION DES PUREES ET/OU JUS AVEC UN VISCOSITE ELEVE DES DENREES ALIMENTAIRES D'ORIGINE VEGETALE

(30) Priority: 16.10.2020 IT 202000024439
(43) Date of publication of application: 23.08.2023
(73) Proprietor: Bertocchi, Alessandro, 43125 Parma (IT)
(72) Inventor: Bertocchi, Alessandro, 43125 Parma (IT)
(74) Representative: De Milato, Francesco
(86) International application number: PCT/IB2021/059494
(87) International publication number: WO 2022/079677

(56) References cited:
- WO-A2-2005/039308
- WO-A2-2010/103376
- WO-A2-2013/105016
- WO-A2-2015/097673
- US-B1- 7 807 209

## Description

### Field of the invention

The present invention relates to the food field and, in particular, relates to a plant for producing puree and/or juice with a high viscosity starting from a food product of vegetable origin.

Furthermore, the invention relates to the process for producing puree and/or juice carried out by the aforementioned plant.

### Background of the invention

As it is known, the industrial extraction of juice and puree from food products such as, fruits and vegetables, is carried out by rotating machines, such as rough extractors and refiner extractors. These, normally, comprise a rotor provided with blades and mounted within a fixed, or movable sieve, having a cylindrical, or conical shape, and provided with holes of determined size. The rotor is operatively connected to a driving group which causes the same to rotate about a rotation axis. The centrifugal force so generated by the blades of the rotor on the treated product forces this against the sieve causing the same to be separated into the extracted food product, i.e. the juice, or puree, which passes through the holes of the sieve and is discharged through a first outlet, and the waste part, mainly seeds, skins and petioles which, instead, does not pass through the holes of the sieve and is discharged through a second outlet. See as an example US4643081.

A known process of this type is the extraction at room temperature, also said "cold" extraction, that is, normally, carried out in two steps. In a first step a grinding and/or softening of the food pulps is carried out, for example, applying a series of pulses in quick succession as for example described in EP0511174, and in a second step within an extraction is carried out the aforementioned separation of the treated product into an extracted food product, i.e. the juice and the puree, from the solid parts to be wasted. Normally, the puree extracted at room temperature is, then, heated within a heating plant for blocking the enzymatic activity and stabilizing the same, this process is known as enzymatic inactivation.

Another type of process is the hot extraction, which, instead, provides to carry out the extraction after having heated the product in a heating section up to reach a determined temperature.

A drawback both of the plants for carrying out the "cold" extraction and of the plants for carrying out the "hot" extraction is that when a creamy final product, i.e. having a high viscosity, is to be produced, it is necessary to carry out the extraction working at a high rotation speed of the rotor. In this way, in fact, the turbulence produced by the rotor within the machine during rotation is increased and, therefore, the processed product is homogenized, because a great part of the waste product, which comprises skin, seeds, and petioles, originally present in the product reduces its size and, therefore, can pass through the sieve, thus, increasing the viscosity of the final product.

However, as known, in the extraction section most of the main product obtained passes through the sieve at the first portion of this. Therefore, even though a high angular velocities of the rotor is reached, it is, anyway, not possible, to significantly increase the viscosity of the final product, because the resident time of the treated product within the extraction section is, anyway, not sufficient. In addition to the above, working at high angular velocities means also to have a high energy consumption.

Therefore, with both the cold and hot extraction sections of known type, it is not possible to obtain a creamy product, i.e. having a high viscosity.

Another drawback of the known plant, in particular for producing puree or juice from tomatoes is that the fruits, i.e. the tomatoes are normally transported to the plant together with the herbaceous and woody parts of the plant. Therefore, it is very common that parts of the product are embedded between the components of the machines which carry out the treatment of the product, in particular the rough extractors and the refiner extractors, and therefore it is necessary to stop the machine in order to remove the same with consequent loss of time and productivity, besides causing the final product to be "polluted".

Examples of plants for producing puree, or juice, starting from products of vegetable origin, having the above drawbacks are described in WO2015/097673 and WO2010/103376.

### Summary of the invention

It is, therefore, an object of the present invention to provide a plant for producing puree and/or juice, from a food product of vegetable origin which allows to overcome the drawbacks described above of the prior art plants.

It is, in particular, an object of the present invention to provide a plant for producing puree and/or juice, from a food product of vegetable origin which allows to obtain a final creamy product, i.e. with a high viscosity, and, at the same time, to reduce the energy consumptions.

These and other objects are achieved by a plant, according to the invention, for producing juice and/or puree from a food product of vegetable origin said plant comprising:
- a treating section comprising an inlet for introducing a food product of vegetable origin, and an outlet for discharging a treated food product of vegetable origin, said treating section being configured in such a way that the quantity of food product introduced through said inlet is equal to the quantity of treated food product discharged through said outlet, said treating section comprising:
   - a fixed hollow body having a substantially cylindrical or conical shape having a predetermined length L and provided with a treating surface;
   - a first rotor also this having a substantially cylindrical or conical shape, said fixed hollow body and said rotor being configured in such a way that said treating surface is positioned at a first distance (d1) from said first rotor at an inlet end which is closer to said inlet less than, or equal to 100 mm, i.e. d1≤100 mm, and at a second distance (d2) with d2<d1, at an outlet end more distant from said inlet;

   - a first driving group configured to cause said first rotor to rotate about a first rotation axis at a predetermined peripheral velocity vT;
- a division section positioned upstream of said treating section and configured to divide a food product of vegetable origin into a plurality of pieces of determined size;
- an extraction section positioned downstream of said treating section and configured to separate said treated food product of vegetable origin into a main product comprising said puree and/or juice and a waste product;
whose main feature is that said division section is configured to divide said food product of vegetable origin into a plurality of pieces having at least a dimension with a length equal to, or less than, said first distance (d1) between said treating surface of said fixed hollow body and said first rotor at said inlet end, in such a way to allow to easily introduce the pieces into said treating section.

Other features of the invention and related embodiments are set out in the dependent claims.

In particular, the aforementioned first driving group can be configured to operate the first rotor in such a way that the following expression vT·L/d2 i.e. the product of the peripheral velocity (vT) and the length (L) of the fixed hollow body divided for the second distance (d2) is comprised between 2 and 80 (m²/sec)/mm, advantageously between 2 and 60 (m²/sec)/mm, preferably between 2 and 20 (m²/sec)/mm.

According to another aspect of the invention, a method for producing juice and/or puree from a food product of vegetable origin comprises the steps of:
- dividing a food product of vegetable origin into a plurality of pieces of determined size;
- treating said pieces within a treating section configured in such a way that the quantity of the product introduced through an inlet is equal to the quantity of treated food product discharged through an outlet, the treating section comprising a fixed hollow body having a substantially cylindrical or conical shape, having a predetermined length L and provided with a treating surface, and a first rotor also this having a substantially cylindrical or conical shape, said fixed hollow body and said first rotor being configured in such a way that said treating surface is positioned from said first rotor at a first distance (d1) at an inlet end nearer to said inlet less than, or equal to 100 mm, i.e. d1≤100 mm, and at a second distance (d2) with d2<d1, at an outlet end more distant from said inlet;
- extracting said treated food product of vegetable origin downstream of said treating section in order to divide said treated food product of vegetable origin into a main product comprising said puree and/or juice and a waste product;
whose main characteristic is that the division step is arranged to divide said food product of vegetable origin into a plurality of pieces having at least one dimension with a length equal to, or less than, a said first distance (d1) between said fixed hollow body and said rotor at said inlet end, in such a way to allow to easily introduce the pieces into said treating section.

### Brief description of the drawings

The invention will be now illustrated with the following description of an exemplary embodiment thereof, exemplifying but not limitative, with reference to the attached drawings wherein:
- Fig. 1 diagrammatically shows a first embodiment of the plant, according to the invention, for producing puree, or juice, from a food product of vegetable origin;
- Figures 2A, 3A, 3C and 4A diagrammatically show some possible embodiments of the treating section of the plant of figure 1;
- Figures 2B, 3B, 3D and 4B diagrammatically show some enlargements of the outlet end of the treating sections of the figures 2A, 3A and 4A, respectively;
- Fig. 5A shows a first embodiment of a division section of the plant, according to the invention, for producing puree, or juice, from a food product of vegetable origin;
- Fig. 5B shows a first embodiment of an extraction section of the plant, according to the invention, for producing puree, or juice, from a food product of vegetable origin;
- Figures from 6A to 6E show transversal section views of some possible embodiments of the treating section provided by the plant according to the invention;
- Fig. 7 shows an enlargement of figure 6E to highlight some characteristics of the treating section according to the invention;
- Figures 8, 9A, 9B, 10, and from 12A to 16 diagrammatically show some alternative embodiments of the plant of figure 1 according to the invention;
- Fig. 11 shows an enlargement of the treating section of figure 10 in order to highlight some characteristics of the treating section;
- Figures 17 and 18 respectively show a front view and a perspective view of a possible embodiment of the rotor of the treating section of the plant according to the invention;

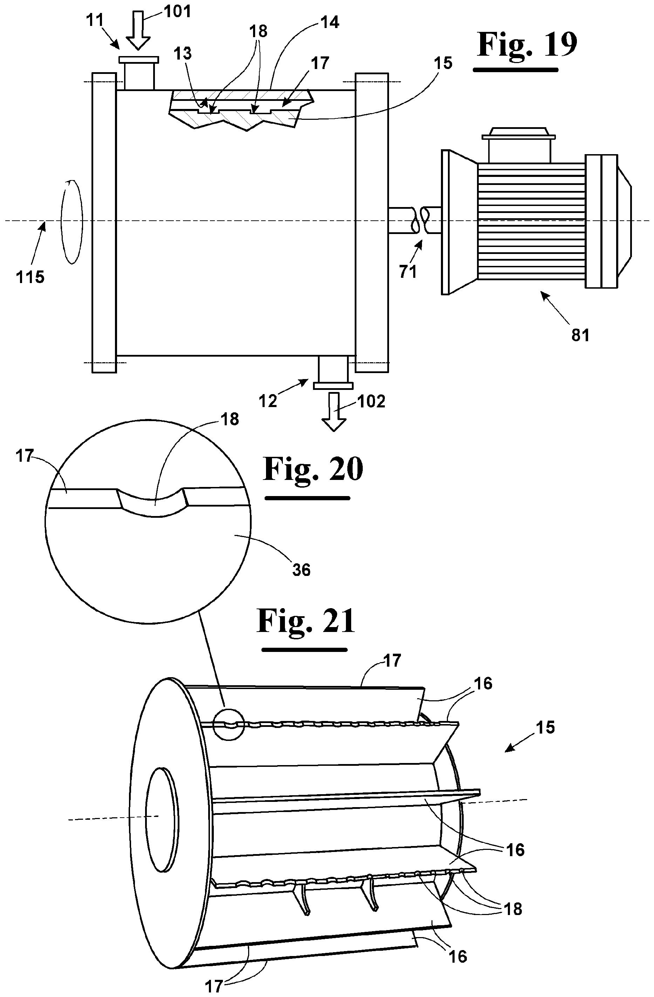

- Fig. 19 diagrammatically shows a side view partially sectioned of a possible embodiment of a treating section of the plant according to the invention;
- Fig. 20 shows a side elevation perspective view of the rotor of the treating section of figure 19;
- Fig. 21 diagrammatically shows an enlargement of a portion of a blade of the rotor of figure 18;
- Fig. 22 diagrammatically shows a further embodiment of the plant according to the invention.

### Detailed description of some exemplary embodiments of the invention

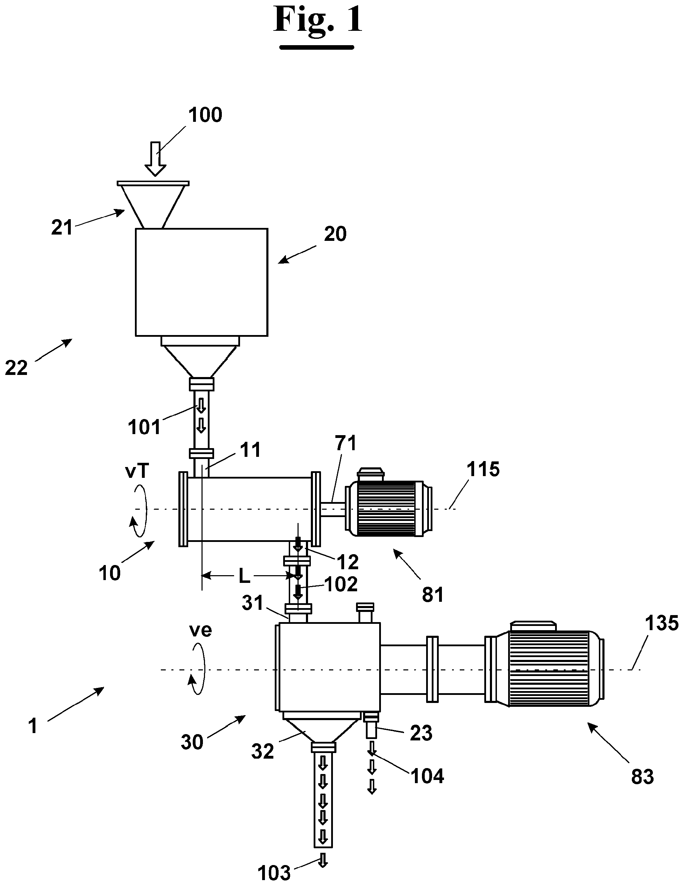

As diagrammatically shown in figure 1, a plant 1, according to the invention, for producing juice and/or puree from a food product of vegetable origin, in particular tomato, comprises a treating section 10 comprising an inlet 11 for introducing the food product of vegetable origin 100, and an outlet 12 for discharging a treated food product of vegetable origin. In particular, the treating section 10 is configured in such a way that the quantity of food product introduced through the inlet 11 is equal to the quantity of treated food product discharged through the outlet 12. More in particular, the treating section 10 comprises a fixed hollow body, or stator, 13 having a substantially cylindrical or conical shape. The fixed hollow body, or stator, 13 has a predetermined length L, in particular a "useful" length, i.e. the distance between the inlet 11 and the outlet 12, and is provided, at an internal wall, with a treating surface 14. Within the fixed hollow body 13 of the treating section 10 a first rotor 15 is provided also this having a substantially cylindrical or conical shape and arranged to apply a centrifugal force to the treated pieces 101 of food product of vegetable origin thus pushing them against the aforementioned treating surface 14. The fixed hollow body 13 and the first rotor 15 are configured, in particular have a size such that the treating surface 14 is positioned at a first distance (d1) from the first rotor 15 at an inlet end 10a closer to the inlet 11, that is less than, or equal to 100 mm, i.e. d1≤100 mm, and at a second distance (d2) with d2<d1, at an outlet end 10b, more distant from the inlet 11. In particular, the second distance (d2) can be less than, or equal to 10 mm, i.e. d2≤10 mm, advantageously less than, or equal to 5 mm, i.e. d2≤5 mm, preferably less than, or equal to 3 mm, i.e. d2≤3 mm.

The treating section 10 provides, furthermore, a first driving group 81 configured to cause the first rotor to rotate 15 about a first rotation axis 115 at a predetermined peripheral velocity vT. For example, the first rotation axis 115 can be oriented along a horizontal direction, or can be inclined of an angle less than 30° with respect to a horizontal direction. In this way, the management of the treating section 10 is simplified with respect to different technical solutions, in particular solutions which provide treating section with vertical axis, because, in this case, the force of gravity comes into play.

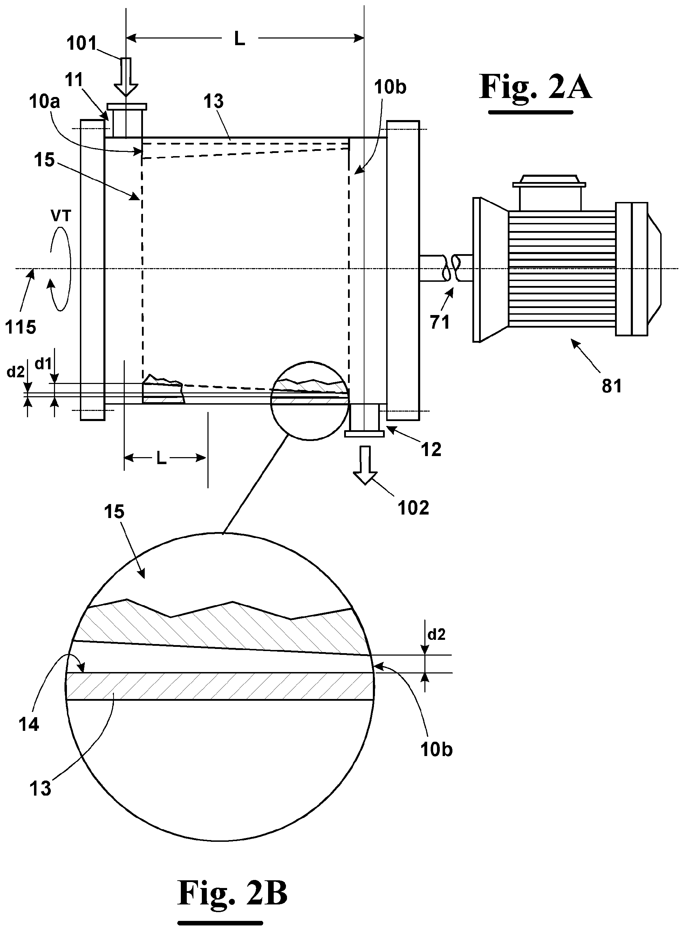

More in detail, in the embodiment diagrammatically shown in the figures 2A and 2B, the fixed hollow body, or stator, 13 of the treating section 10 has a substantially cylindrical geometry, instead the first rotor 15 has a substantially conical geometry.

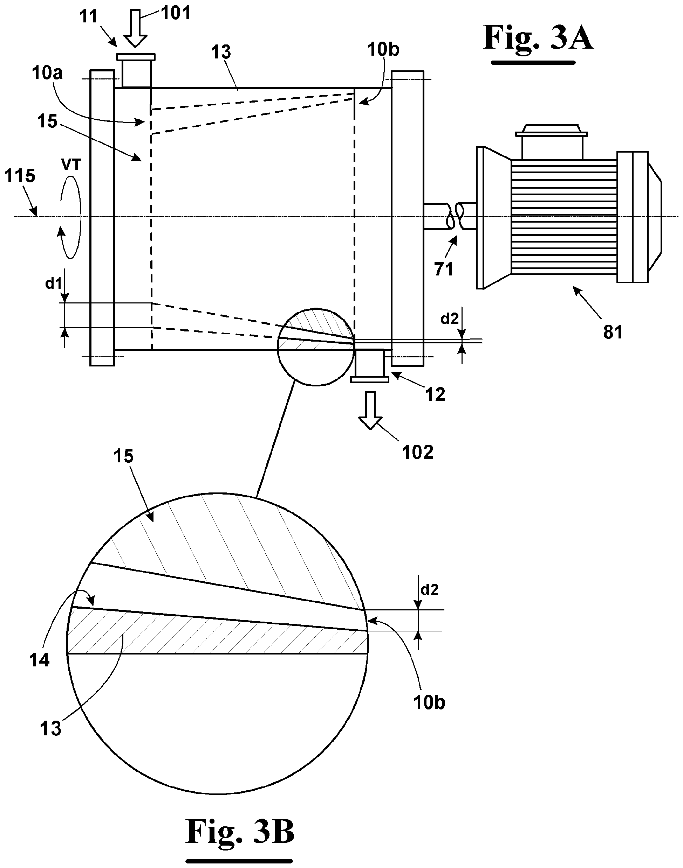

In an alternative embodiment foreseen and diagrammatically shown in the figures 3A and 3B, both the fixed hollow body 13, or stator, and the first rotor 15 have a substantially conical geometry with cross section progressively increasing between the first end portion 15a and the second end portion 15b. In this case, the conical geometries of the fixed hollow body, or stator, 13, and of the first rotor 15 can be different from each other in such a way to form the aforementioned "funnel" when the product reaches the space between the treating surface 14 and the external surface 16 of the first rotor 15.

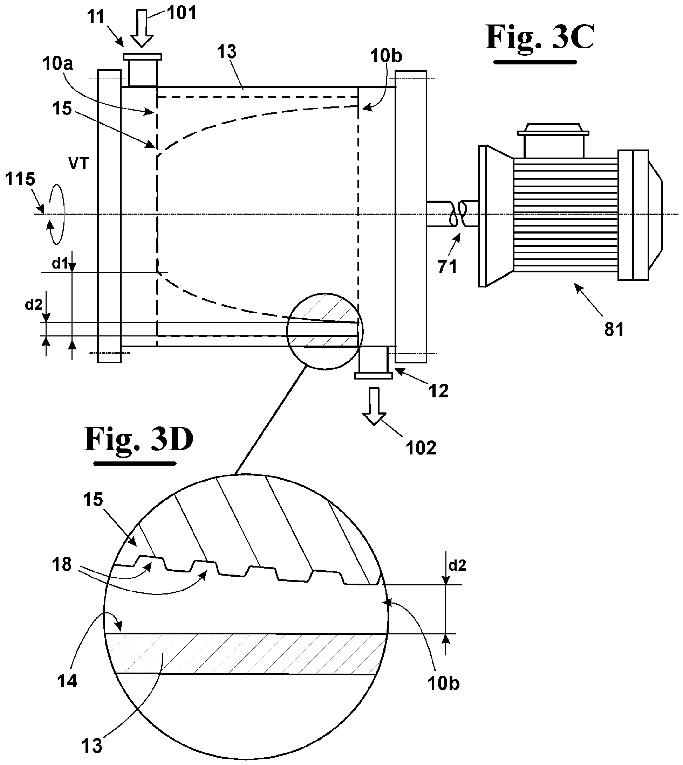

Also in the embodiment of figures 3C and 3D, both the fixed hollow body 13, or stator, and the first rotor 15 have a substantially conical geometry with a section which progressively increases between the first end portion 15a and the second end portion 15b of rotor 15. In this case, however, the profile of the blades of rotor 15 is curvilinear, in particular substantially parabolic. Also in this case, at the inlet end 10a, between the blades of rotor and the stator 13 the aforementioned funnel which facilitates the introduction of product 100 into the treating section 10 is formed. As diagrammatically shown as an example in figure 3D, the blades 16 of rotor 15 at the surface facing towards the treating surface 14 of the stator 13, can be provided with a series of depressions 18 in order to increase turbulence in the product during the working of the treating section 10.

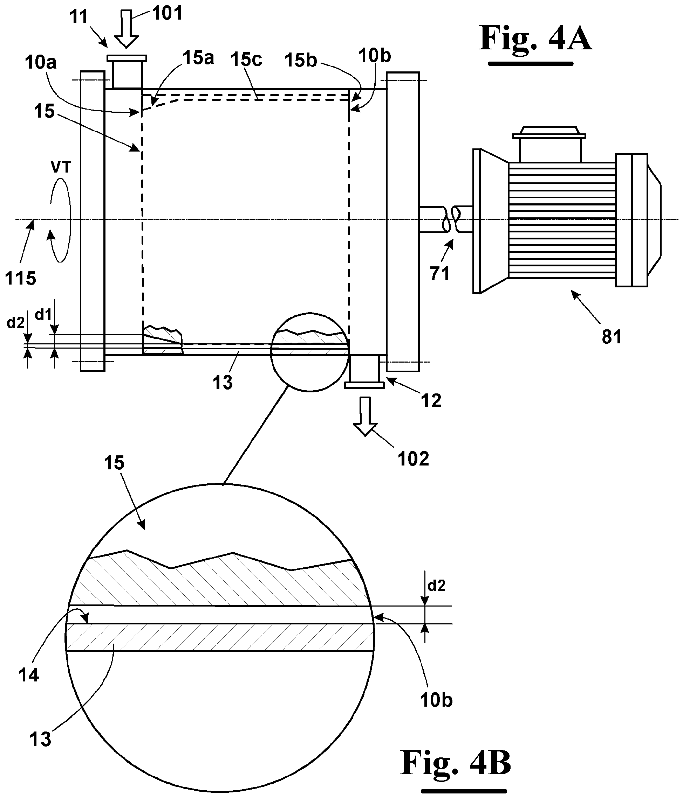

In a further embodiment of figure 4A and 4B both the fixed hollow body 13, or stator, and the first rotor 15 of the treating section 10 have a substantially cylindrical geometry. However, also in this case, the first rotor 15 has, advantageously, at a first end portion 15a a cross section having a smaller diameter which progressively increases up to a working portion 15c and then is substantially constant up to the second end portion 15b opposite to the first end portion 15a. In this way, a "funnel" is substantially formed that facilitates the introduction of the product within the treating section 10.

Upstream of the treating section 10 a division section 20 is provided and configured to divide an entire food product of vegetable origin 100 into a plurality of pieces 101 of predetermined size. In particular, according to the invention, the division section 20 is configured to divide the entering food product of vegetable origin 100 into a plurality of pieces 101 having at least a dimension with a length equal to, or less than, the first distance (d1) between the fixed hollow body 13 and the first rotor 15 at the inlet end 10a. In this way, the introduction of the product within the treating section 10 is facilitated. In particular, the first driving group 81 can be arranged to operate the first rotor 15 at a peripheral velocity vT such that the following expression (vT·L)/d2 i.e. the product of the peripheral velocity (vT) and the length (L) of the fixed hollow body divided for the second distance (d2) is comprised between 2 and 80 (m²/sec)/mm, advantageously between 2 and 60 (m²/sec)/mm, preferably between 2 and 20 (m²/sec)/mm.

In particular, the aforementioned peripheral velocity vT can be comprised between 20 m/sec and 100 m/sec, preferably comprised between 20 m/sec and 60 m/sec.

Downstream of the treating section 10 is, furthermore, foreseen an extraction section 30 configured to separate the treated food product of vegetable origin that is discharged from the treating section 10 into a main product comprising puree and/or juice and a waste product containing the skins, the seeds, etc.

The plant 1, according to the invention, allows, in particular, to obtain a final product 103 that is highly viscous and both without bright parts, which are, normally, due to the presence of seeds, and dark parts, which are, instead, normally, due to defects in the processed product, as, instead, generally happen with the puree and juices produced by the prior art plants.

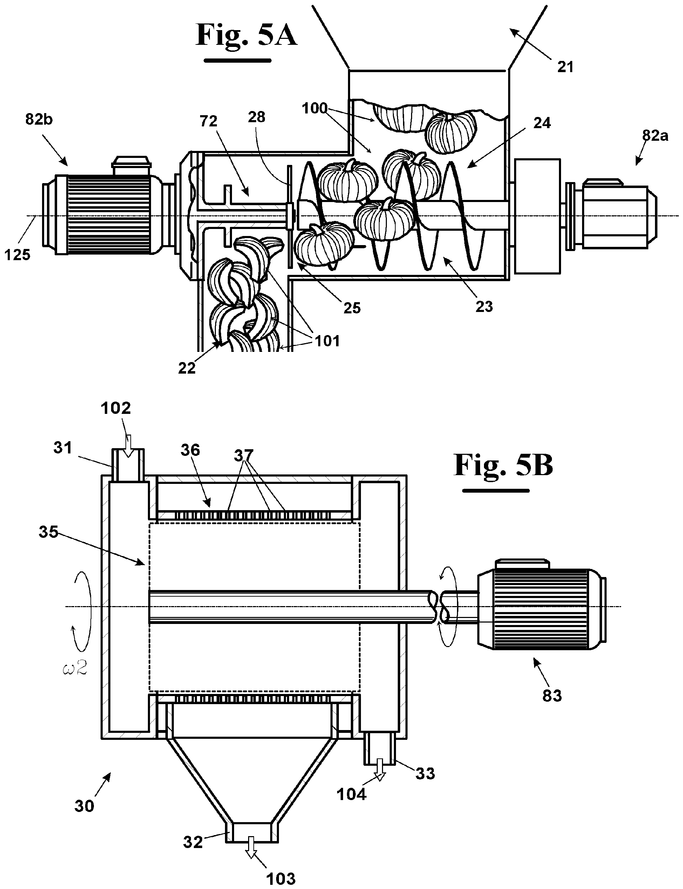

A first example of a division section 20 is shown in figure 5A. As diagrammatically shown in figure 5A, the division section 20 can comprise an inlet 21 through which the entire products, for example tomatoes, are fed into a hollow body 23. Here the product can be, for example, pushed by a screw operated by a first motor 82a towards a cut member 28, for example comprising 2, or more cutting blades. The cut member 28 can be fixed, or movable. In figure 5A as an example the cut member 28 is provided configured to rotate about an axis 125 operated by a second motor 82b.

An example of an extraction section 30 is diagrammatically shown in figure 5B. In particular, the extraction section 30 can provide a rotor 35 provided with blades and mounted within a fixed, or movable, sieve 36 having a substantially cylindrical, or substantially conical, shape and provided with holes 37 of determined size. The rotor 35 is operatively connected to a driving group 83 which causes its rotation about a rotation axis 135. As known, the centrifugal force so produced by the blades of rotor 35 on the treated product forces the latter against the sieve 36 causing the separation of the extracted food product, i.e. the juice and/or the puree, which passes through the holes 37 of the sieve 36 and is discharged through a first outlet 32, from the part to be discharged, mainly seeds, skins and petioles, which, instead, do not pass through the holes of the sieve 36 and is discharged through a second outlet 33.

In particular, the internal wall 33 of the hollow body 34 can have a substantially cylindrical, or conical, surface, which is substantially "smooth", embodiment not shown in the figure for simplicity.

Alternatively, as diagrammatically shown in the figures from 6A to 6E, the treating surface 14 of the fixed hollow body 13 can provide a plurality of recessed portions 19a and a plurality of protruding portions 19b alternating to each other, in such a way to be substantially "wavy". More in detail, the protruding portions 19b and the recessed portions 19a of the treating surface 14 of the fixed hollow body 13 can be obtained by a series of straight portions, or curvilinear portions, in such a way to form sharp edges, or round edges at the protruding portions 19b and/or the recessed portions 19a.

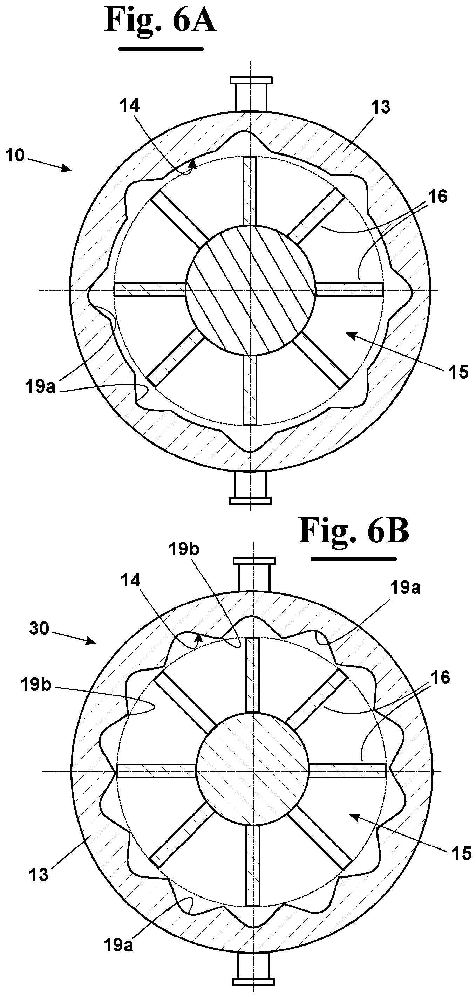

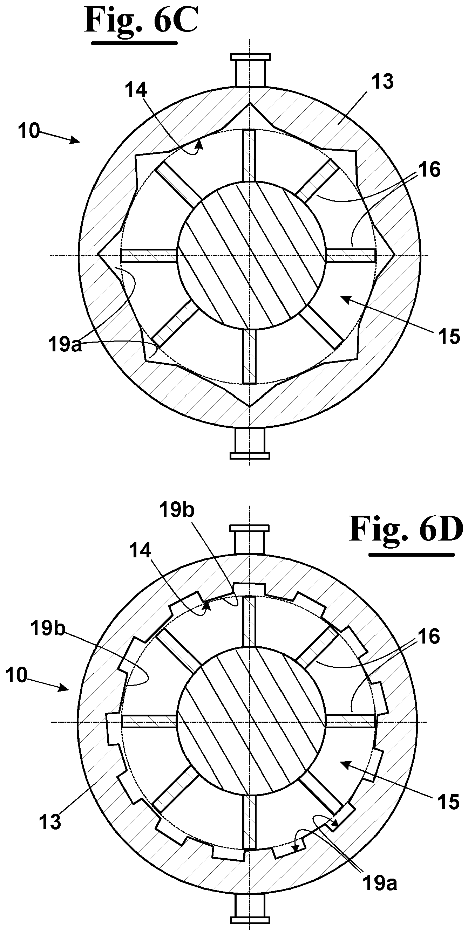

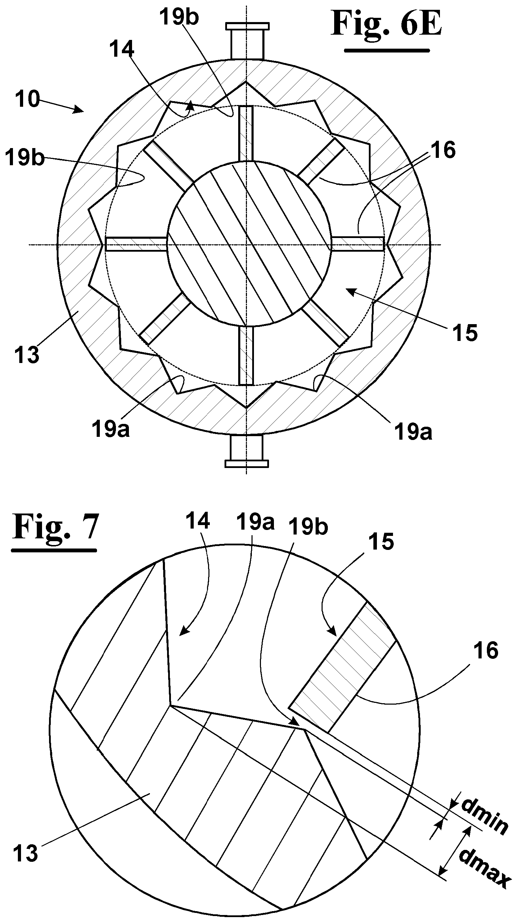

In particular, as diagrammatically shown in figure 7 for the embodiment of figure 6E, but also valid for all the embodiments of the invention diagrammatically shown in the figures from 6A to 6E, the lowered portions 19a of the treating surface 14 of the fixed hollow body 13 are positioned at a maximum distance dmax from the first rotor 15, in particular from the ends 17 of the blades 16 of this, instead, the protruding portions 19b are positioned at a minimum distance dmin from the first rotor 15. In this case, the first driving group 81 is configured to operate the first rotor 15 in such a way that the product of the peripheral velocity vT expressed in m/sec, and the length of the fixed hollow body 13, expressed in m, divided for the minimum distance at the outlet end (d2min), i.e. vT·L/(d2min) is comprised between 2 and 80 (m²/sec)/mm, advantageously between 2 and 60 (m²/sec)/mm, preferably between 2 and 20 (m²/sec)/mm.

Advantageously, the ratio between the maximum distance dmax and the minimum distance dmin can be comprised between 1 and 20, i.e. 1≤dmax/dmin≤20, advantageously comprised between 1 and 10, i.e. 1≤dmax/dmin≤10. For example, the minimum distance dmin can be comprised between 0,1 mm and 10 mm, advantageously between 0,2 mm and 10 mm, preferably between 0,5 mm and 5 mm. In particular, the maximum distance dmax can be comprised between 2 mm and 100 mm, advantageously between 5 mm and 100 mm, preferably between 5 mm and 50 mm.

In an alternative embodiment foreseen, the treating surface 14 of the fixed hollow body 13 and the first rotor 15 are configured in such a way to be positioned at a distance d1 at the inlet end 10a less than, or equal to 50 mm, i.e. d1≤50 mm. In this case, therefore, the division section 20 is arranged to divide the food product of vegetable origin which enters through the inlet 21 into pieces having at least a dimension of length smaller than, or equal to 50 mm. In another alternative embodiment foreseen, the distance d1 at the inlet end 10a is less than, or equal to 30 mm, i.e. d1≤30 mm.

In an embodiment of the invention, the aforementioned substantially cylindrical, or substantially conical, treating surface 14 of the fixed hollow body 13, or its planar development, can be at least equal to 50% of the surface of sieve 36 of the extraction section 30, or its planar development, advantageously at least equal to 60% of the surface of sieve 36, or its planar development, preferably at least equal to 70% of the surface of the second sieve 36, or its planar development.

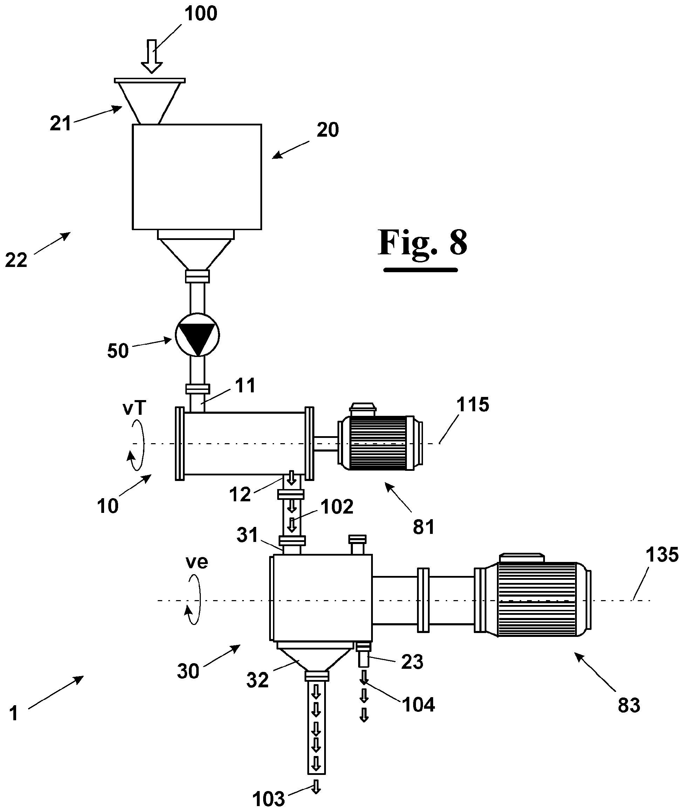

Even though the possibility that the pieces obtained by the division section 20 can be discharged by gravity into the treating section 10 is foreseen, it is also foreseen the possibility, diagrammatically shown in figure 8, that they can be sucked by a pump device 50 from the outlet 22 of the division section 20 and fed into the treating section 10.

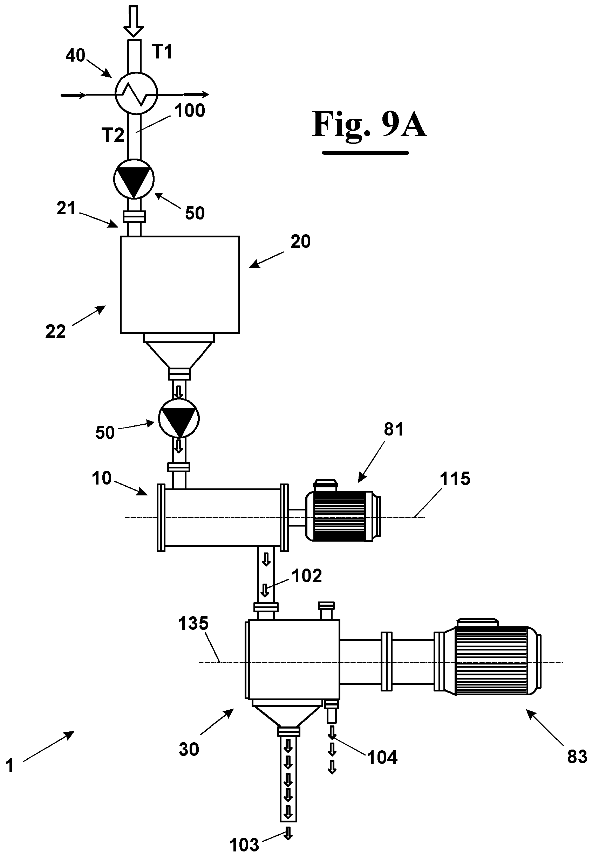

In figure 9A another alternative embodiment of the plant 1 of figure 1 is diagrammatically shown, where upstream of the division section 20 a heating section 40 is provided configured to heat the food product of vegetable origin from a first temperature T1 to a second temperature T2 with T2>T1, advantageously comprised between 60°C and 110°C. In particular, the heating section 40 can be configured to heat the food product of vegetable origin from a first temperature T1, for example comprised between 0°C and 20-25 °C, up to a second temperature T2 comprised between 60°C and 85°C if a less viscous final product is desired, or comprised between 85°C and 110°C if, instead, a more viscous final product is desired. As diagrammatically shown in figure 9A, in case that upstream of the division section 20 a heating section 40 is provided, the heated product can be, preferably, fed into the division section 20 by a pump device 50, for example positioned between the heating section 40 and the division section 20. Alternatively, in particular if upstream of the division section 20 no heating section is provided, the food product 100 can be fed into the division section 20 by a hopper (figures 1, 8, 9B).

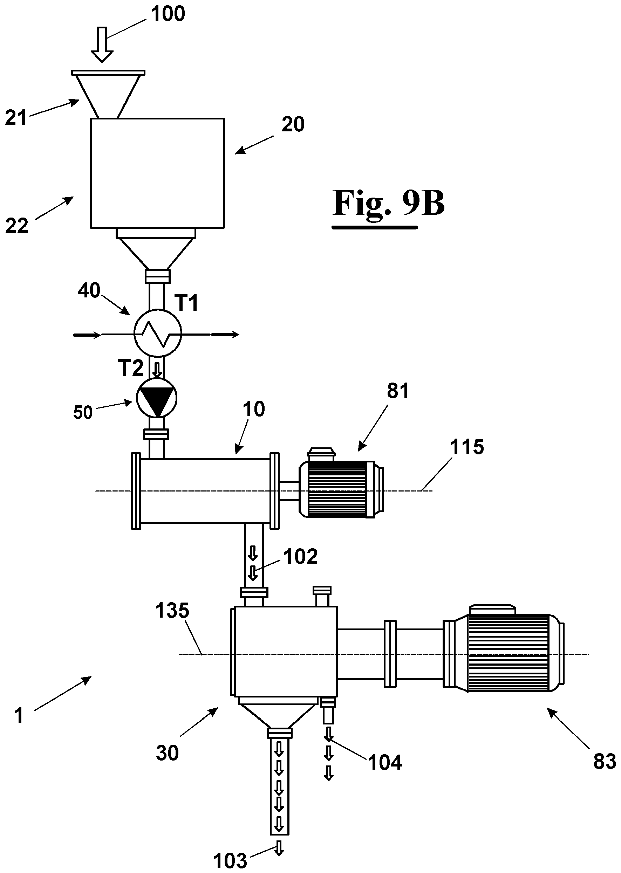

In particular, in the embodiment of figure 9B, the heating section 40 described above with reference to figure 9A is positioned between the division section 20 and the treating section 30. Analogously to the previous case, the heating section 40 is advantageously configured to heat the pieces of food product of vegetable origin from a first temperature T1, for example comprised between 0°C and 20-25°C, to a second temperature T2 with T2>T1, advantageously comprised between 60°C and 110°C, preferably comprised between 60°C and 85°C, in case a less viscous final product is desired to be obtained, or comprised between 85°C and 110°C in case, instead, a more viscous final product is to be obtained.

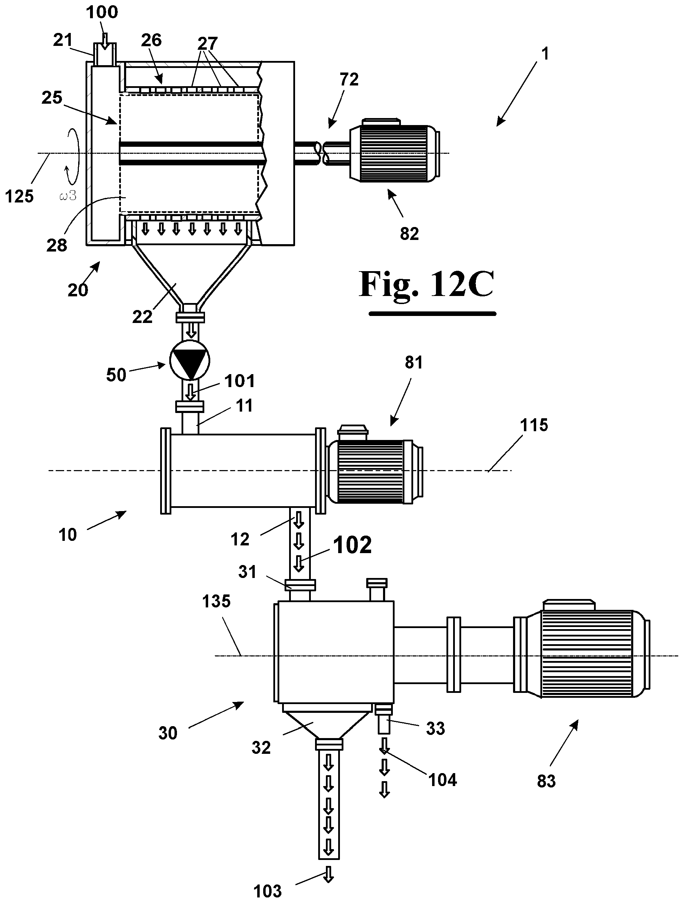

The division section 20 can be, in particular, configured to carry out the aforementioned division of the product into pieces of determined size by griding, or cutting, or forcing the processed product to pass through the holes of predetermined size of a sieve. In particular, as diagrammatically shown in figure 12C, within the division section 20, a rotor 25 can be provided arranged to rotate about a rotation axis 125 operated by a driving group 82. More in particular, the rotor 25, for example provided with blades 28, can be configured to force the product present within the division section 20 to pass through the holes 27 of a sieve 26 to cause them to be divided into pieces having corresponding dimensions. Advantageously, the holes 27 can have a diameter greater than 2 mm, in particular a diameter greater than 5 mm, advantageously a diameter greater than 10 mm, preferably a diameter greater than 20 mm. This solution is particularly advantageous when upstream of the division section 20 the aforementioned heating section 40 is present. In the example of figure 12C only one outlet 22 is present through which the cut product is discharged downstream of the division section 20. However, it is also foreseen the possibility that the division section 20 is provided with a first outlet 22 to discharge the pieces 101, which are passed through the sieve 26, into the treating section 10, and with a second outlet through which can be discharged the pieces that are not cut, i.e. those that have not passed through the holes 27 of the sieve 26, for example the stones of the processed product having a size greater than the size of the holes 27.

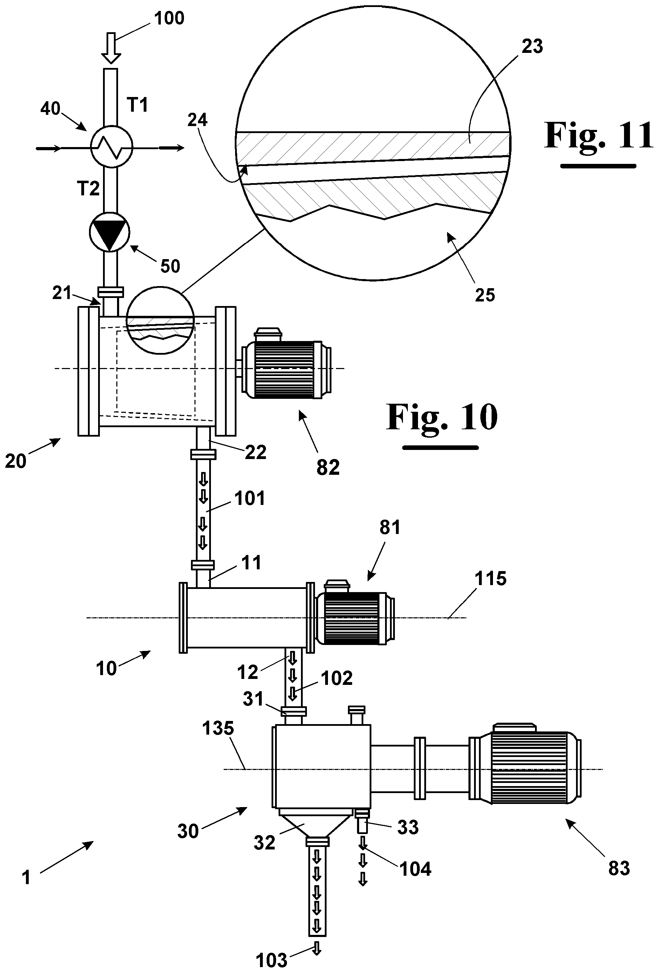

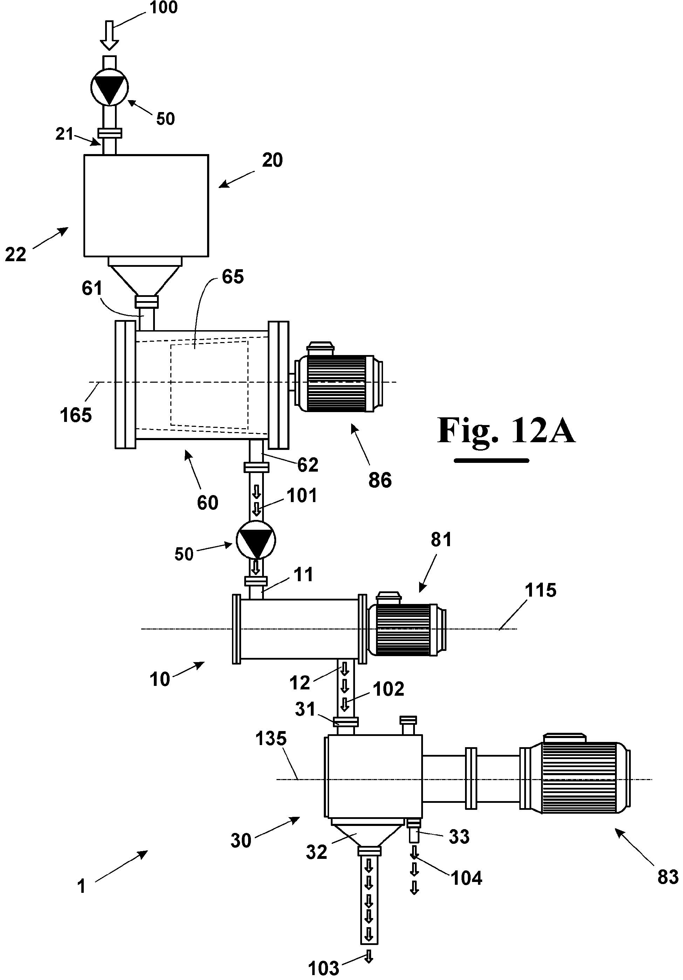

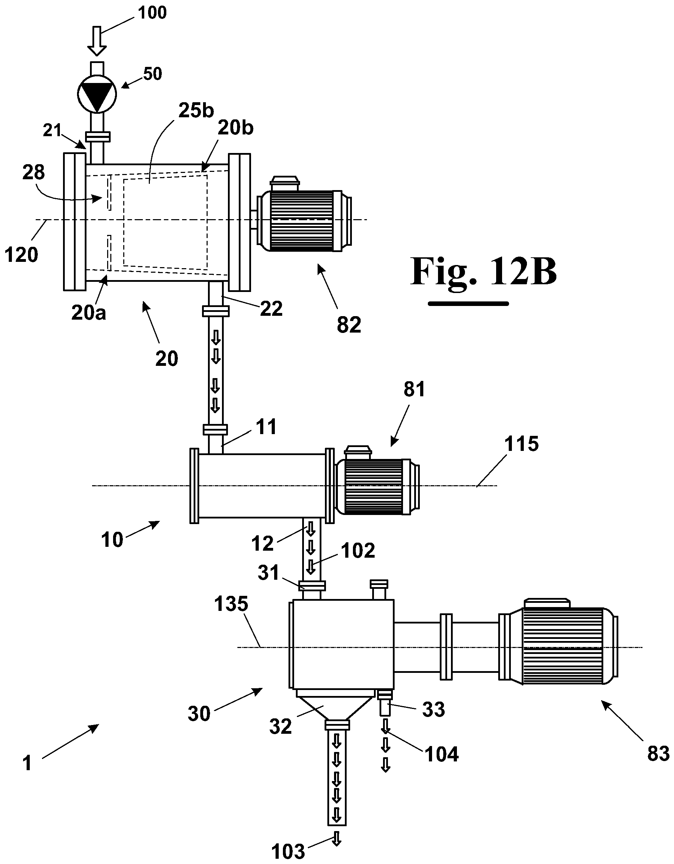

In the embodiment diagrammatically shown in the figures 10 and 11, the division section 20 can be also configured to divide the processed food product of vegetable origin in the aforementioned pieces having at least a dimension of length less than, or equal to the aforementioned first distance d1 by applying a series of compression stresses in quick succession. In particular, the division section 20 can comprise a fixed hollow body 23 having a substantially cylindrical or conical shape (as in the case shown in the figures 11 and 12) and a second rotor 25 also this having a substantially cylindrical or conical shape (as in the case shown in the figures 11 and 12). In particular, a second driving group 82 is, furthermore, provided configured to cause the second rotor 25 to rotate about a second rotation axis 125 in such a way to subject the processed product to the aforementioned series of compression stresses in quick succession.

In an alternative embodiment that is provided, the division section 20 can be equipped with a fixed, or movable, cut member 28 configured to cut the entering product into pieces having at least a dimension of length less than the first distance d1.

For example, the aforementioned cut member 28 can be provided with a predetermined number of blades mounted on a rotation shaft 72 operated by a respective driving group 82.

In the embodiment diagrammatically shown in figure 12A, downstream of the division section 20 and upstream of the treating section 10 a softening section 60 is provided comprising a rotor 65 having a substantially cylindrical or conical shape, housed within a fixed hollow body 63 provided with an inlet 61 for the product to be treated and with an outlet 62 for discharging the treated product 102. In particular, the rotor 65 is arranged to be operated by a respective driving group 86 for applying a series of compression stresses in quick succession on the cut product before feeding the same into the treating section 10. In this case, whilst the division section 20 acts at least on one dimension of the product for reducing the same up to a length less than 100 mm, advantageously less than 50 mm, the softening section 60 acts on another dimension for reducing this up to a length less than 50 mm, advantageously less than 30 mm, preferably less than 20 mm. This solution allows, in particular, to reduce the wastes with respect to the other embodiments of the inventions.

In the further embodiment diagrammatically shown in figure 12B, the division section 20 comprises a first division group 20a provided with the aforementioned cut member 28 comprising for example a first blade and a second blade arranged at opposite sides with respect to the longitudinal axis 120 of the division section 20, and a second division group 20b comprising the aforementioned rotor 25b configured, as described above with reference to the figures 10, 11 and 12A, to be housed within the fixed hollow body 23 and operated by the second driving group 82 for applying a series of compression stresses in quick succession on the cut product before discharging the same from the division section 20 through the outlet 22.

In a further embodiment of the invention, the treating section 10 and the extraction section 30 are configured in such a way that the respective rotation axes 115 and 135 are arranged parallel to each other with the treated product that is discharged from the treating section 10 along a trajectory that is tangential to the peripheral velocity of rotor 15.

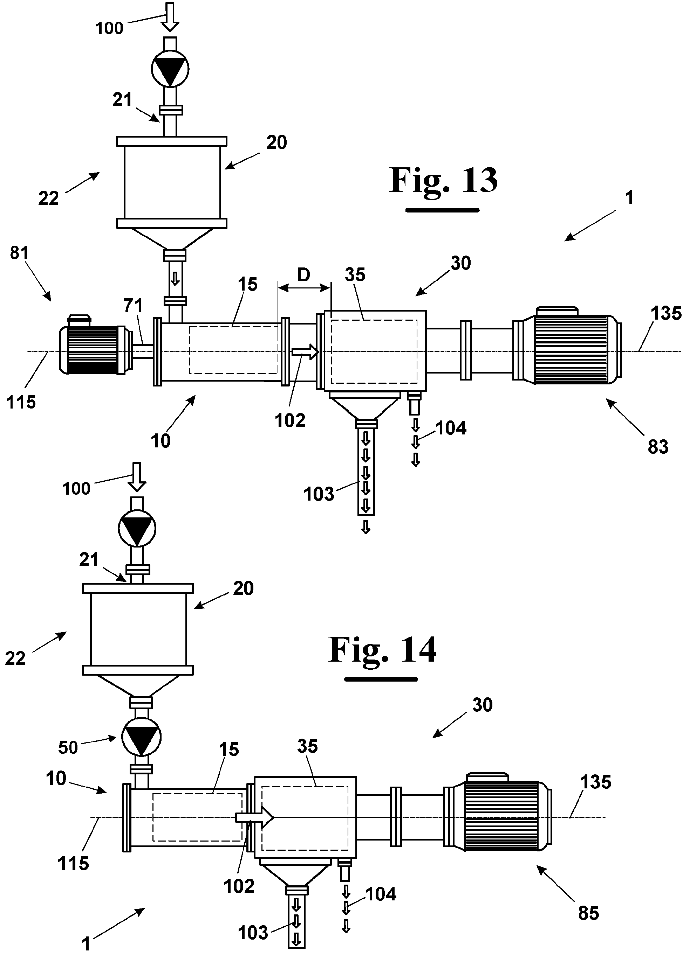

As diagrammatically shown in figure 13, according to still another embodiment of the invention, the treating section 10 and the extraction section 30 can be positioned in line with each other, i.e. with the respective rotors 15 and 35 configured to rotate about respective rotation axes 115 and 135 operated by respective driving groups 81 and 83, but coaxially arranged with respect to each other. In particular, the distance D between the outlet of the product from the treating section 10 and the inlet of the treated product in the extraction section 30, in particular between the ends of the respective rotors 15 and 35 facing with each other, is less than 2 m, advantageously less than 1 m.

In the embodiment of figure 14, the treating section 10 and the extraction section 30 are arranged in line with each other, analogously to the case of figure 13, but, in this case, the respective rotors 15 and 35 are operated by the same driving group 85.

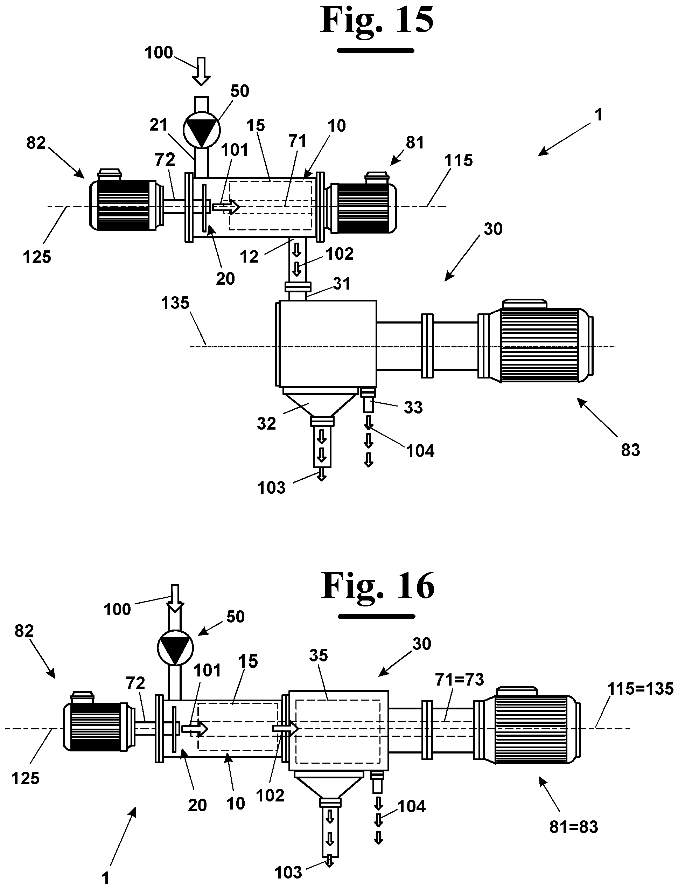

In the further embodiment of figure 15, the division section 20 and the treating section 10 are provided housed within the same machine. In particular, the division section 20 can be provided with a cut member 28 operated by a motor 82 by a motor shaft 72 in order to rotate about a rotation axis 125 in such a way to cause the product to be divided into pieces 101 having at least a dimension of length less than the distance d1 between the fixed hollow body 13 and the rotor 15 of the treating section 10. More in particular, the treating section 10 is axially arranged with the division section 20, i.e. the motor shaft 71 operatively connected to the motor 81 which causes the rotation of the rotor 15 about the rotation axis 115 is coaxially arranged with respect to the aforementioned motor shaft 72 of the division section 20.

As diagrammatically shown in the still further embodiment of figure 16, the division section 20, the treating section 10 and the extraction section 30 can be arranged in line with each other, i.e. in such a way that the different rotation axes 125, 115 and 135 are coaxially arranged with respect to each other. More in detail, in the example of figure 16, the division section 20 can be provided with the cut member 28 for example a series of blades fixed to a motor shaft 72 operated by a motor 82, instead, the rotor 15 of the treating section 10 and the rotor 35 of the extraction section 30 can be mounted on the same motor shaft 71=73 caused to rotate about the same axis 115=135 by the same motor 81=83.

In the embodiments described above with reference to the figures from 1 to 16 the rotor 15 of the treating section 10 can be advantageously provided with a series of radial blades 16 projecting from a central portion, for example fixed by welding, mounted on the motor shaft 71 operatively connected to the first driving group 81.

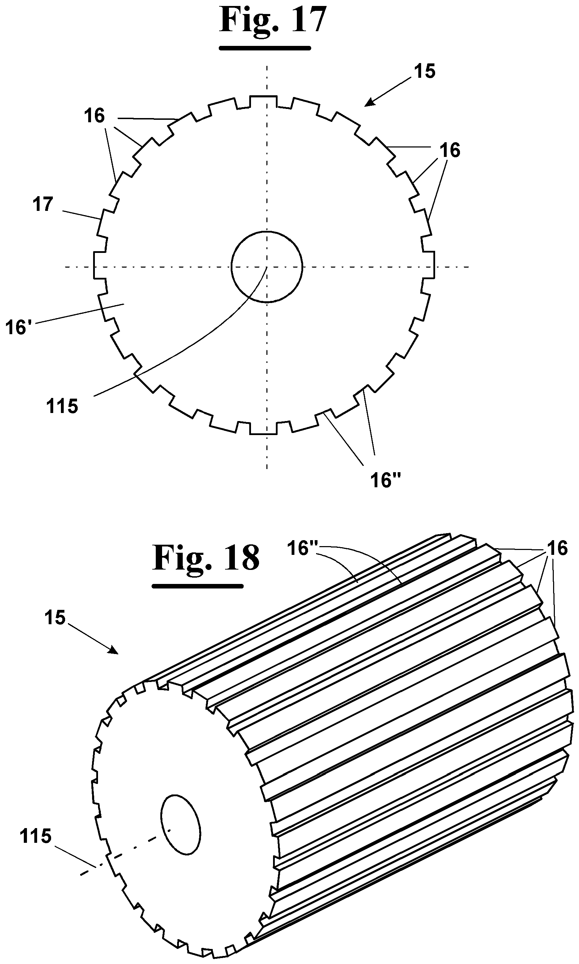

In the alternative embodiment diagrammatically shown in the figures 17 and 18, the first rotor 15 of the treating section 10 provides a predetermined number of protruding portions 16, also these assimilable to blades, which radially protrude from a main body 16'. In particular, the protruding portions, or blades, 16 can be made starting from a cylindrical, or conical frustum shaped full body subject this to a working operation, for example a milling, arranged to make a series of longitudinal recessed portions 16" which laterally delimit each protruding portion 16.

According to another embodiment diagrammatically shown in the figures from 19 to 21, at least a part of the aforementioned blades 16 of rotor 15, both in the case of protruding blades and in the case of longitudinal grooves like those that are shown in the figures 15 and 16, at the edge 17 that during working conditions faces towards the aforementioned treating surface 14 of the fixed hollow body, or stator, 13, can be provided with a plurality of recessed portions, or "depressions", 18. The recessed portions 18 can have all the same width and the same depth, or, as foreseen in an alternative embodiment of the invention, have a width and/or a depth decreasing going from the inlet 11 to the outlet 12 of the treating section 10. In particular, the depressions 18 change the axial velocity of the product within the treating section 10 and create a turbulence which contributes to further increase the viscosity of the treated product.

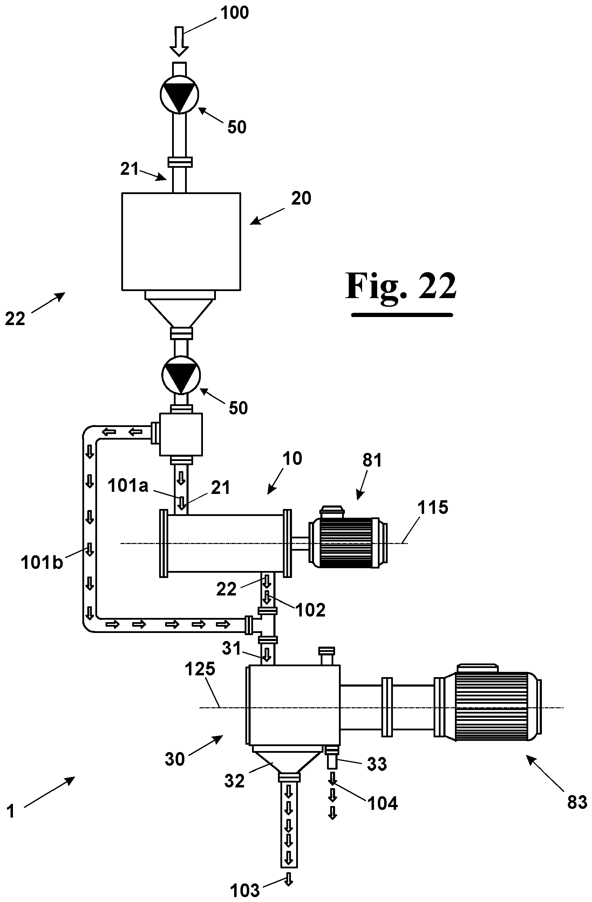

In the further embodiment of figure 22, between the treating section 10 and the extraction section 30 a deviation device 70 is provided. This, for example a three ways valve, is configured to deviate the flow of cut product exiting the division section 20 and to divide it into a first flow 101a which is fed into the treating section 10 where is subjected to the treatment as described above, and a second flow 101b which, instead, bypasses the treating section 10 and is directly sent downstream of the same. More in particular, the second flow 101b can be directly fed into the extraction section 30, case not shown in the figure for simplicity, or as shown in the example of figure 22, can be mixed with the treated product 103, which exits the treating section 10, for example by a "T" connection member, or by a second deviation device similar to the deviation device 70, not shown in figure for simplicity, obtaining a mixed product which is, therefore, fed into the extraction section 30. In this way, it is possible to obtain a flow of product comprising a more viscous fraction essentially consisting of the product 103 discharged from the treating section 10 and obtained by treating the aforementioned first flow 101a, immersed into a more liquid fraction essentially consisting of the aforementioned second flow 101b.

Advantageously, in case that the plant 1 provides a heating section 40, the transfer of the pieces 101 of food product 100 from the division section 20 to the treating section 10 can be carried out by a pump device 50 (see at this regard the embodiments diagrammatically shown in the figures 9A, 9B, 11, 12A, 12C, 13 and 22). In an alternative embodiment, the transfer of the pieces 101 of food product 100 from the division section 20 to the treating section 10 can be carried out by gravity positioning the division section 20 at a height higher than that of the treating section 10.

The treated product 102 can be moved from the treating section 10 to the extraction section 30 by a supplementary pump device not shown in figure for simplicity.

In a further embodiment foreseen, the treated product 102 moves from the treating section 10 to the extraction section 30 by gravity, positioning the treating section 10 at a height greater than the extraction section 30.

In the embodiments according to the invention and diagrammatically shown in the figures from 1 to 22, the angular velocity ωT of the first rotor 15 of the treating section 10 can be less than 8000 rpm, preferably less than 6000 rpm. More in particular, the angular velocity ωT can be comprised between 1500 and 6000 rpm, advantageously, between 1500 and 4500 rpm. The diameter of the fixed hollow body 13 of the treating section 10 can be comprised between 200 mm and 800 mm, advantageously comprised between 200 mm and 600 mm.

Advantageously, the angular velocity ω of the extraction section 30 can be comprised between 800 and 4000 rpm, in particular, between 1000 and 2500 rpm, advantageously between 1600 and 2500 rpm. The diameter of the body of the machine at the extraction section 30 can be comprised between 200 mm and 1000 mm, advantageously comprised between 200 mm and 650 mm.

The foregoing description of a specific embodiment will so fully reveal the invention according to the conceptual point of view, so that others, by applying current knowledge, will be able to modify and/or adapt for various applications such an embodiment without further research and without parting from the invention as defined in the claims, and it is therefore to be understood that such adaptations and modifications will have to be considered as equivalent to the specific embodiment. The means and the materials to realise the different functions described herein could have a different nature without, for this reason, departing from the invention, as defined in the claims. It is to be understood that the phraseology or terminology employed herein is for the purpose of description and not of limitation.

## Claims

1. Plant (1) for producing juice and/or puree from a food product of vegetable origin, said plant (1) comprising:
- a treating section (10) provided with an inlet (11) for introducing a food product of vegetable origin (100), and an outlet (12) for discharging a treated food product of vegetable origin, said treating section (10) being configured in such a way that the quantity of food product (100) introduced through said inlet (11) is equal to the quantity of treated food product discharged through said outlet (12), said treating section (10) comprising:
- a fixed hollow body, or stator, (13) having a substantially cylindrical or conical shape having a predetermined length (L) and provided with a treating surface (14);
- a first rotor (15) also this having a substantially cylindrical or conical shape, said fixed hollow body (13) and said first rotor (15) being configured in such a way that said treating surface (14) is positioned at a first distance (d1) from said first rotor (15) at an inlet end (10a) closer to said inlet (11) less than, or equal to 100 mm, i.e. d1≤100 mm, and at a second distance (d2) with d2<d1, at an outlet end (10b) more distant from said inlet (11);
- a first driving group (81) configured to cause said first rotor (15) to rotate about a first rotation axis (115) at a predetermined peripheral velocity (vT);
- a division section (20) positioned upstream of said treating section (10) and configured to divide a food product of vegetable origin (100) into a plurality of pieces (101) of determined size;
- an extraction section (30) positioned downstream of said treating section (10) and configured to separate said treated food product of vegetable origin (102) into a main product (103) comprising said puree and/or juice and a waste product (104);
said plant (1) being **characterized in that** said division section (20) is configured to divide said food product of vegetable origin (100) into a plurality of pieces (101) having at least a dimension with a length equal to, or less than, a said first distance (d1) between said fixed hollow body (13) and said first rotor (15) at said inlet end (10a), in such a way to allow to easily introduce the pieces into said treating section (10).

2. Plant (1) according to claim 1, wherein said fixed hollow body (13) and said first rotor (15) are configured in such a way that said treating surface (14) is positioned at a first distance (d1) from said first rotor (15) at said inlet end (10a) that is less than, or equal to 50 mm, i.e. d1≤50 mm.

3. Plant (1) according to claim 1, or 2, wherein said first driving group (81) is configured to operate said first rotor (15) in such a way that the following expression (vT·L)/d2 i.e. the product of the peripheral velocity (vT) and the length of the fixed hollow body (L) divided for the second distance (d2) is comprised between 2 and 80 (m²/sec)/mm.

4. Plant (1) according to any of the previous claims, wherein said treating surface (14) comprises a plurality of lowered portions positioned at a maximum distance (dmax) from said first rotor (15) alternating to a plurality of protruding portions positioned at a minimum distance (dmin) from said first rotor (15).

5. Plant according to claim 4, wherein said first driving group (81) is configured to operate said first rotor (15) in such a way that the following expression: (vT·L)/d2min i.e. the product of the peripheral velocity (vT) and the length (L) of the fixed hollow body (13) divided for said minimum distance at said outlet end (d2min) is comprised between 2 and 80 m/sec.

6. Plant (1) according to claim 5 wherein said minimum distance (dmin) is comprised between 0.5 mm and 5 mm.

7. Plant (1) according to any of the previous claims, wherein upstream of said division section (20) is, furthermore, provided a heating section (40) configured to heat a food product of vegetable origin from a first temperature T1 up to a second temperature T2 comprised between 60°C and 115°C, in particular said second temperature T2 being comprised:
- between 60°C and 85°C in order to obtain a less viscous product;
- between 85°C and 110°C in order to obtain a more viscous product.

8. Plant (1) according to any of the previous claims wherein said division section (20) is configured to divide said food product of vegetable origin into said pieces having at least a dimension of length less than, or equal to the aforementioned first distance d1 by applying a series of compression stresses in quick succession, said division section (20) comprising:
- a fixed hollow body (23) having a substantially cylindrical or conical shape provided with an internal wall (24);
- a second rotor (25) also this having a substantially cylindrical, or substantially conical, shape;
- a second driving group (82) configured to cause said second rotor (25) to rotate about a second rotation axis (125).

9. Plant (1) according to any of the previous claims wherein said division section (20) is equipped with a cut member (28) configured to cut said food product (100) into said pieces (101) having at least a dimension of length less than, or equal to said first distance (d1).

10. Plant (1) according to any of the previous claims wherein said division section (20) comprises a cut member (28) provided with a plurality of blades mounted on an axial rotation shaft (72) operated by a second driving group (82).

11. Plant (1) according to any of the previous claims, wherein between said division section (20) and said treating section (10) a softening section (60) is provided configured to subject the processed product to a series of compression stresses in quick succession, said softening section (60) comprising a fixed hollow body (63) provided with an inlet (61) for the product to be softened and an outlet (62) to discharge the softened product, within said fixed hollow body (63) a respective rotor (65) being provided arranged to rotate about a rotation axis (165) to subject said food product of vegetable origin to said series of compression stresses in quick succession.

12. Plant (1), according to any of the previous claims, wherein said predetermined peripheral velocity (vT) of said first rotor (15) of said treating section (10) is comprised between 20 m/sec and 100 m/sec.

13. Plant (1), according to any of the previous claims, wherein said first rotor (15) of said treating section (10) is arranged to rotate at an angular velocity (ωT) less than 8000 rpm, advantageously less than 6000 rpm.

14. Plant (1), according to any of the previous claims, wherein said first rotor (15) of said treating section (10) is provided with a plurality of blades (16) at least a part of which provided with an edge (17) facing, in use, towards said treating surface (14) of said fixed hollow body (13) having a plurality of lowered portions (18).

15. Method for producing juice and/or puree from a food product of vegetable origin, comprising the steps of:
- dividing a food product of vegetable origin (100) in a plurality of pieces (101) of determined size;
- treating a divided food product in a treating section (10) configured in such a way that the quantity of food product that is introduced through an inlet (11) is equal to the quantity of treated food product discharged through an outlet (12), said treating section (10) comprising a fixed hollow body (13) having a substantially cylindrical or conical shape, having a treating surface (14), and a first rotor (15) also this having a substantially cylindrical or conical shape, said fixed hollow body (13) and said first rotor (15) being configured in such a way that said treating surface (14) is positioned from said first rotor (15) at a first distance (d1) at an inlet end (10a) closer to said inlet (11) less than, or equal to 100 mm, i.e. d1≤100 mm, and at a second distance (d2) with d2<d1, at an outlet end (10b) more distant from said inlet (11);
- extracting, downstream of said treating section, said treated food product of vegetable origin to divide said treated food product of vegetable origin into a main product comprising said puree and/or juice and a waste product;
said method being **characterized in that** said dividing step is arranged to divide said food product of vegetable origin (100) into a plurality of pieces (101) having at least a dimension with a length equal to, or less than, a said first distance (d1) between said fixed hollow body (13) and said rotor (15) at said inlet end (10a), in such a way to allow to easily introduce the pieces into said treating section (10).

## Patentansprüche

1. Vorrichtung (1) zur Herstellung von Saft und/oder Püree aus einem Lebensmittelprodukt pflanzlicher Herkunft, wobei die Vorrichtung (1) Folgendes umfasst:
- einen Behandlungsbereich (10), der mit einem Einlass (11) zum Einführen eines Lebensmittelprodukts pflanzlicher Herkunft (100) und einem Auslass (12) zum Ausgeben eines behandelten Lebensmittelprodukts pflanzlicher Herkunft bereitgestellt ist, wobei der Behandlungsbereich (10) auf derartige Weise konfiguriert ist, dass die Menge des durch den Einlass (11) eingeführten Lebensmittelprodukts (100) gleich der Menge des durch den Auslass (12) ausgegebenen behandelten Lebensmittelprodukts ist, wobei der Behandlungsbereich (10) Folgendes umfasst:
- einen feststehenden Hohlkörper oder Stator (13), der eine im Wesentlichen zylindrische oder konische Form aufweist, die eine vorbestimmte Länge (L) aufweist und mit einer Behandlungsoberfläche (14) bereitgestellt ist;
- einen ersten Rotor (15), der auch eine im Wesentlichen zylindrische oder konische Form aufweist, wobei der feststehende Hohlkörper (13) und der erste Rotor (15) auf derartige Weise konfiguriert sind, dass die Behandlungsoberfläche (14) in einem ersten Abstand (d1) von dem ersten Rotor (15) an einem Einlassende (10a), das sich kleiner oder gleich 100 mm, d. h. d1≤100 mm, näher an dem Einlass (11) befindet, und in einem zweiten Abstand (d2) mit d2<d1 an einem Auslassende (10b), das weiter von dem Einlass (11) entfernt ist, positioniert ist;
- eine erste Antriebsgruppe (81), die dazu konfiguriert ist, zu bewirken, dass sich der erste Rotor (15) mit einer vorbestimmten Umfangsgeschwindigkeit (vT) um eine erste Drehachse (115) dreht;
- einen Teilungsbereich (20), der stromaufwärts des Behandlungsbereichs (10) positioniert ist und dazu konfiguriert ist, ein Lebensmittelprodukt pflanzlicher Herkunft (100) in eine Vielzahl von Stücken (101) einer bestimmten Größe zu teilen;
- einen Extraktionsbereich (30), der stromabwärts des Behandlungsbereichs (10) positioniert ist und dazu konfiguriert ist, das behandelte Lebensmittelprodukt pflanzlicher Herkunft (102) in ein Hauptprodukt (103), das das Püree und/oder den Saft umfasst, und ein Abfallprodukt (104) zu trennen;
wobei die Vorrichtung (1) **dadurch gekennzeichnet ist, dass** der Teilungsbereich (20) dazu konfiguriert ist, das Lebensmittelprodukt pflanzlicher Herkunft (100) auf derartige Weise in eine Vielzahl von Stücken (101) zu teilen, die mindestens eine Abmessung mit einer Länge gleich oder kleiner als der erste Abstand (d1) zwischen dem feststehenden Hohlkörper (13) und dem ersten Rotor (15) an dem Einlassende (10a) aufweist, dass zugelassen wird, die Stücke auf einfache Weise in den Behandlungsbereich (10) einzuführen.

2. Vorrichtung (1) nach Anspruch 1, wobei der feststehende Hohlkörper (13) und der erste Rotor (15) auf derartige Weise konfiguriert sind, dass die Behandlungsoberfläche (14) in einem ersten Abstand (d1) von dem ersten Rotor (15) an dem Einlassende (10a) positioniert ist, der kleiner oder gleich 50 mm ist, d. h. d1≤50 mm.

3. Vorrichtung (1) nach Anspruch 1 oder 2, wobei die erste Antriebsgruppe (81) dazu konfiguriert ist, den ersten Rotor (15) auf derartige Weise zu betreiben, dass der folgende Ausdruck (vT·L)/d2 gilt, d. h., das Produkt der Umfangsgeschwindigkeit (vT) und der Länge des feststehenden Hohlkörpers (L) geteilt durch den zweiten Abstand (d2) ist zwischen 2 und 80 (m²/sek)/mm umfasst.

4. Vorrichtung (1) nach einem der vorhergehenden Ansprüche, wobei die Behandlungsoberfläche (14) eine Vielzahl von vertieften Abschnitten, die in einem maximalen Abstand (dmax) von dem ersten Rotor (15) positioniert ist, abwechselnd mit einer Vielzahl von hervorstehenden Abschnitten, die in einem minimalen Abstand (dmin) von dem ersten Rotor (15) positioniert ist, umfasst.

5. Vorrichtung nach Anspruch 4, wobei die erste Antriebsgruppe (81) dazu konfiguriert ist, den ersten Rotor (15) auf derartige Weise zu betreiben, dass der folgende Ausdruck gilt: (vT·L)/d2min, d. h., das Produkt der Umfangsgeschwindigkeit (vT) und der Länge (L) des feststehenden Hohlkörpers (13) geteilt durch den minimalen Abstand an dem Auslassende (d2min) ist zwischen 2 und 80 m/sek umfasst.

6. Vorrichtung (1) nach Anspruch 5, wobei der minimale Abstand (dmin) zwischen 0,5 mm und 5 mm umfasst ist.

7. Vorrichtung (1) nach einem der vorhergehenden Ansprüche, wobei stromaufwärts des Teilungsbereichs (20) außerdem ein Heizbereich (40) bereitgestellt ist, der dazu konfiguriert ist, ein Lebensmittelprodukt pflanzlicher Herkunft von einer ersten Temperatur T1 auf eine zweite Temperatur T2, die zwischen 60 °C und 115 °C umfasst ist, zu erhitzen, wobei die zweite Temperatur T2 insbesondere zwischen Folgenden umfasst ist:
- zwischen 60 °C und 85 °C, um ein weniger viskoses Produkt zu erlangen;
- zwischen 85 °C und 110 °C, um ein viskoseres Produkt zu erlangen.

8. Vorrichtung (1) nach einem der vorhergehenden Ansprüche, wobei der Teilungsbereich (20) dazu konfiguriert ist, das Lebensmittelprodukt pflanzlicher Herkunft durch Anwenden einer Reihe von Druckspannungen in schneller Folge in die Stücke zu teilen, die mindestens eine Längenabmessung kleiner oder gleich dem vorgenannten ersten Abstand d1 aufweisen, wobei der Teilungsbereich (20) Folgendes umfasst:
- einen feststehenden Hohlkörper (23), der eine im Wesentlichen zylindrische oder konische Form aufweist, die mit einer Innenwand (24) bereitgestellt ist;
- einen zweiten Rotor (25), der auch eine im Wesentlichen zylindrische oder im Wesentlichen konische Form aufweist;
- eine zweite Antriebsgruppe (82), die dazu konfiguriert ist, zu bewirken, dass sich der zweite Rotor (25) um eine zweite Drehachse (125) dreht.

9. Vorrichtung (1) nach einem der vorhergehenden Ansprüche, wobei der Teilungsbereich (20) mit einem Schneidelement (28) ausgestattet ist, das dazu konfiguriert ist, das Lebensmittelprodukt (100) in die Stücke (101) zu schneiden, die mindestens eine Längenabmessung kleiner oder gleich dem ersten Abstand (d1) aufweisen.

10. Vorrichtung (1) nach einem der vorhergehenden Ansprüche, wobei der Teilungsbereich (20) ein Schneidelement (28) umfasst, das mit einer Vielzahl von Klingen bereitgestellt ist, die auf einer axialen Drehwelle (72) montiert ist, die durch eine zweite Antriebsgruppe (82) betrieben wird.

11. Vorrichtung (1) nach einem der vorhergehenden Ansprüche, wobei zwischen dem Teilungsbereich (20) und dem Behandlungsbereich (10) ein Erweichungsbereich (60) bereitgestellt ist, der dazu konfiguriert ist, das verarbeitete Produkt in schneller Folge einer Reihe von Druckspannungen auszusetzen, wobei der Erweichungsbereich (60) einen feststehenden Hohlkörper (63) umfasst, der mit einem Einlass (61) für das zu erweichende Produkt und einem Auslass (62) zum Abgeben des erweichten Produkts bereitgestellt ist, wobei innerhalb des feststehenden Hohlkörpers (63) ein jeweiliger Rotor (65) bereitgestellt ist, der dazu angeordnet ist, sich um eine Drehachse (165) zu drehen, um das Lebensmittelprodukt pflanzlicher Herkunft in schneller Folge der Reihe von Druckspannungen auszusetzen.

12. Vorrichtung (1) nach einem der vorhergehenden Ansprüche, wobei die vorbestimmte Umfangsgeschwindigkeit (vT) des ersten Rotors (15) des Behandlungsbereichs (10) zwischen 20 m/sek und 100 m/sek umfasst ist.

13. Vorrichtung (1) nach einem der vorhergehenden Ansprüche, wobei der erste Rotor (15) des Behandlungsbereichs (10) dazu angeordnet ist, sich mit einer Winkelgeschwindigkeit (ωT) von weniger als 8000 U/min, vorteilhafterweise weniger als 6000 U/min, zu drehen.

14. Vorrichtung (1) nach einem der vorhergehenden Ansprüche, wobei der erste Rotor (15) des Behandlungsbereichs (10) mit einer Vielzahl von Klingen (16) bereitgestellt ist, wovon mindestens ein Teil mit einer Kante (17) bereitgestellt ist, die in Verwendung in Richtung der Behandlungsoberfläche (14) des feststehenden Hohlkörpers (13) weist, die eine Vielzahl von vertieften Abschnitten (18) aufweist.

15. Verfahren zur Herstellung von Saft und/oder Püree aus einem Lebensmittelprodukt pflanzlicher Herkunft, umfassend die folgenden Schritte:
- Teilen eines Lebensmittelprodukts pflanzlicher Herkunft (100) in eine Vielzahl von Stücken (101) einer bestimmten Größe;
- Behandeln eines geteilten Lebensmittelprodukts in einem Behandlungsbereich (10), der auf derartige Weise konfiguriert ist, dass die Menge des Lebensmittelprodukts, das durch einen Einlass (11) eingeführt wird, gleich der Menge des durch einen Auslass (12) ausgegebenen behandelten Lebensmittelprodukts ist, wobei der Behandlungsbereich (10) einen feststehenden Hohlkörper (13), der eine im Wesentlichen zylindrische oder konische Form aufweist, die eine Behandlungsoberfläche (14) aufweist, und einen ersten Rotor (15), der auch eine im Wesentlichen zylindrische oder konische Form aufweist, umfasst, wobei der feststehende Hohlkörper (13) und der erste Rotor (15) auf derartige Weise konfiguriert sind, dass die Behandlungsoberfläche (14) von dem ersten Rotor (15) in einem ersten Abstand (d1) an einem Einlassende (10a), das sich kleiner oder gleich 100 mm, d. h. d1≤100 mm, näher an dem Einlass (11) befindet, und in einem zweiten Abstand (d2) mit d2<d1 an einem Auslassende (10b), das weiter von dem Einlass (11) entfernt ist, positioniert ist;
- Extrahieren des behandelten Lebensmittelprodukts pflanzlicher Herkunft stromabwärts des Behandlungsbereichs, um das behandelte Lebensmittelprodukt pflanzlicher Herkunft in ein Hauptprodukt, das das Püree und/oder den Saft umfasst, und ein Abfallprodukt zu teilen;
wobei das Verfahren **dadurch gekennzeichnet ist, dass** der Teilungsschritt dazu angeordnet ist, das Lebensmittelprodukt pflanzlicher Herkunft (100) auf derartige Weise in eine Vielzahl von Stücken (101) zu teilen, die mindestens eine Abmessung mit einer Länge gleich oder kleiner als der erste Abstand (d1) zwischen dem feststehenden Hohlkörper (13) und dem Rotor (15) an dem Einlassende (10a) aufweist, dass zugelassen wird, die Stücke auf einfache Weise in den Behandlungsbereich (10) einzuführen.

## Revendications

1. Installation (1) pour la production de jus et/ou de purées à partir d'un produit alimentaire d'origine végétale, ladite installation (1) comprenant :
- une section de traitement (10) pourvue d'une entrée (11) pour l'introduction d'un produit alimentaire d'origine végétale (100), et d'une sortie (12) pour l'évacuation d'un produit alimentaire traité d'origine végétale, ladite section de traitement (10) étant configurée de telle sorte que la quantité de produit alimentaire (100) introduite par ladite entrée (11) soit égale à la quantité de produit alimentaire traité évacuée par ladite sortie (12), ladite section de traitement (10) comprenant :
- un corps creux fixe, ou stator, (13) comportant une forme sensiblement cylindrique ou conique comportant une longueur prédéterminée (L) et pourvu d'une surface de traitement (14) ;
- un premier rotor (15) comportant lui aussi une forme sensiblement cylindrique ou conique, ledit corps creux fixe (13) et ledit premier rotor (15) étant configurés de telle manière que ladite surface de traitement (14) soit positionnée à une première distance (d1) dudit premier rotor (15) au niveau d'une extrémité d'entrée (10a) plus proche de ladite entrée (11) inférieure ou égale à 100 mm, à savoir d1≤100 mm, et à une seconde distance (d2) avec d2<d1, au niveau d'une extrémité de sortie (10b) plus éloignée de ladite entrée (11) ;
- un premier groupe d'entraînement (81) configuré pour amener ledit premier rotor (15) à tourner autour d'un premier axe de rotation (115) à une vitesse périphérique prédéterminée (vT) ;
- une section de division (20) positionnée en amont de ladite section de traitement (10) et configurée pour diviser un produit alimentaire d'origine végétale (100) en une pluralité de morceaux (101) de taille déterminée ;
- une section d'extraction (30) positionnée en aval de ladite section de traitement (10) et configurée pour séparer ledit produit alimentaire traité d'origine végétale (102) en un produit principal (103) comprenant ladite purée et/ou ledit jus et un produit de déchet (104) ;
ladite installation (1) étant **caractérisée en ce que** ladite section de division (20) est configurée pour diviser ledit produit alimentaire d'origine végétale (100) en une pluralité de morceaux (101) comportant au moins une dimension avec une longueur égale ou inférieure à une dite première distance (d1) entre ledit corps creux fixe (13) et ledit premier rotor (15) au niveau de ladite extrémité d'entrée (10a), de manière à permettre d'introduire facilement les morceaux dans ladite section de traitement (10).

2. Installation (1) selon la revendication 1, dans laquelle ledit corps creux fixe (13) et ledit premier rotor (15) sont configurés de telle manière que ladite surface de traitement (14) soit positionnée à une première distance (d1) dudit premier rotor (15) au niveau de ladite extrémité d'entrée (10a) qui est inférieure ou égale à 50 mm, à savoir d1≤50 mm.

3. Installation (1) selon la revendication 1 ou 2, dans laquelle ledit premier groupe d'entraînement (81) est configuré pour actionner ledit premier rotor (15) de telle manière que l'expression suivante (vT·L)/d2, à savoir le produit de la vitesse périphérique (vT) et de la longueur du corps creux fixe (L) divisé par la seconde distance (d2) soit comprise entre 2 et 80 (m²/sec)/mm.

4. Installation (1) selon l'une quelconque des revendications précédentes, dans laquelle ladite surface de traitement (14) comprend une pluralité de parties abaissées positionnées à une distance maximale (dmax) dudit premier rotor (15) en alternance avec une pluralité de parties en saillie positionnées à une distance minimale (dmin) dudit premier rotor (15).

5. Installation selon la revendication 4, dans laquelle ledit premier groupe d'entraînement (81) est configuré pour actionner ledit premier rotor (15) de telle manière que l'expression suivante : (vT·L)/d2min, à savoir le produit de la vitesse périphérique (vT) et de la longueur (L) du corps creux fixe (13) divisé par ladite distance minimale au niveau de ladite extrémité de sortie (d2min) soit comprise entre 2 et 80 m/sec.

6. Installation (1) selon la revendication 5, dans laquelle ladite distance minimale (dmin) est comprise entre 0,5 mm et 5 mm.

7. Installation (1) selon l'une quelconque des revendications précédentes, dans laquelle en amont de ladite section de division (20) est en outre prévue une section de chauffe (40) configurée pour chauffer un produit alimentaire d'origine végétale d'une première température T1 jusqu'à une seconde température T2 comprise entre 60° C et 115° C, en particulier ladite seconde température T2 étant comprise :
- entre 60° C et 85° C afin d'obtenir un produit moins visqueux ;
- entre 85° C et 110° C afin d'obtenir un produit plus visqueux.

8. Installation (1) selon l'une quelconque des revendications précédentes, dans laquelle ladite section de division (20) est configurée pour diviser ledit produit alimentaire d'origine végétale en lesdits morceaux comportant au moins une dimension de longueur inférieure ou égale à la première distance d1 susmentionnée en appliquant une série de contraintes de compression en succession rapide, ladite section de division (20) comprenant :
- un corps creux fixe (23) comportant une forme sensiblement cylindrique ou conique pourvu d'une paroi interne (24) ;
- un second rotor (25) comportant lui aussi une forme sensiblement cylindrique, ou sensiblement conique;
- un second groupe d'entraînement (82) configuré pour provoquer la rotation dudit second rotor (25) autour d'un second axe de rotation (125).

9. Installation (1) selon l'une quelconque des revendications précédentes, dans laquelle ladite section de division (20) est équipée d'un élément de coupe (28) configuré pour couper ledit produit alimentaire (100) en lesdits morceaux (101) comportant au moins une dimension de longueur inférieure ou égale à ladite première distance (d1).

10. Installation (1) selon l'une quelconque des revendications précédentes, dans laquelle ladite section de division (20) comprend un élément de coupe (28) pourvu d'une pluralité de lames montées sur un arbre de rotation axial (72) actionné par un second groupe d'entraînement (82).

11. Installation (1) selon l'une quelconque des revendications précédentes, dans laquelle entre ladite section de division (20) et ladite section de traitement (10) est prévue une section de ramollissement (60) configurée pour soumettre le produit traité à une série de contraintes de compression en succession rapide, ladite section de ramollissement (60) comprenant un corps creux fixe (63) pourvu d'une entrée (61) pour le produit à ramollir et d'une sortie (62) pour évacuer le produit ramolli, à l'intérieur dudit corps creux fixe (63), un rotor respectif (65) étant prévu agencé pour tourner autour d'un axe de rotation (165) pour soumettre ledit produit alimentaire d'origine végétale à ladite série de contraintes de compression en succession rapide.

12. Installation (1), selon l'une quelconque des revendications précédentes, dans laquelle ladite vitesse périphérique prédéterminée (vT) dudit premier rotor (15) de ladite section de traitement (10) est comprise entre 20 m/sec et 100 m/sec.

13. Système (1) selon l'une quelconque des revendications précédentes, dans lequel ledit premier rotor (15) de ladite section de traitement (10) est agencé pour tourner à une vitesse angulaire (ωT) inférieure à 8 000 tr/min, avantageusement inférieure à 6 000 tr/min.

14. Système (1) selon l'une quelconque des revendications précédentes, dans lequel ledit premier rotor (15) de ladite section de traitement (10) est pourvu d'une pluralité de lames (16) dont au moins une portion est pourvue d'un bord (17) tourné vers, lors de l'utilisation, ladite surface de traitement (14) dudit corps creux fixe (13) comportant une pluralité de parties abaissées (18).

15. Procédé de production de jus et/ou de purées à partir d'un produit alimentaire d'origine végétale, comprenant les étapes de :
- division d'un produit alimentaire d'origine végétale (100) en une pluralité de morceaux (101) de taille déterminée ;
- traitement d'un produit alimentaire divisé dans une section de traitement (10) configurée de telle manière que la quantité de produit alimentaire qui est introduite via une entrée (11) soit égale à la quantité de produit alimentaire traité évacuée via une sortie (12), ladite section de traitement (10) comprenant un corps creux fixe (13) comportant une forme sensiblement cylindrique ou conique, comportant une surface de traitement (14), et un premier rotor (15) comportant lui aussi une forme sensiblement cylindrique ou conique, ledit corps creux fixe (13) et ledit premier rotor (15) étant configurés de telle manière que ladite surface de traitement (14) soit positionnée par rapport audit premier rotor (15) à une première distance (d1) au niveau d'une extrémité d'entrée (10a) plus proche de ladite entrée (11) inférieure ou égale à 100 mm, à savoir d1≤100 mm, et à une seconde distance (d2) avec d2<d1, au niveau d'une extrémité de sortie (10b) plus éloignée de ladite entrée (11) ;
- extraction, en aval de ladite section de traitement, dudit produit alimentaire traité d'origine végétale pour diviser ledit produit alimentaire traité d'origine végétale en un produit principal comprenant ladite purée et/ou ledit jus et un produit de déchet ;
ledit procédé étant **caractérisé en ce que** ladite étape de division est agencée pour diviser ledit produit alimentaire d'origine végétale (100) en une pluralité de morceaux (101) comportant au moins une dimension avec une longueur égale ou inférieure à une dite première distance (d1) entre ledit corps creux fixe (13) et ledit rotor (15) au niveau de ladite extrémité d'entrée (10a), de manière à permettre d'introduire facilement les morceaux dans ladite section de traitement (10).
